# EUROPÄISCHE PATENTSCHRIFT

(11) **EP 0 622 544 B1**
(45) Veröffentlichungstag und Bekanntmachung des Hinweises auf die Patenterteilung: **24.04.1996**
(21) Anmeldenummer: 94102468.9
(22) Anmeldetag: 18.02.1994
(51) Int. Cl.: F03B 13/14, F03B 13/10

(54) **Verstelleinrichtung für Propellerpumpen**
Adjusting mechanism for axial-flow pump blades
Dispositif de réglage des pales de pompe à écoulement axial

(30) Priorität: 27.02.1993 DE 4306141
(43) Veröffentlichungstag der Anmeldung: 02.11.1994
(73) Patentinhaber: KSB Aktiengesellschaft, D-67227 Frankenthal (DE)
(72) Erfinder: Schaaf, Günter, D-28277 Bremen (DE); Schäfer, Horst, D-27404 Rhade (DE)

(56) Entgegenhaltungen:
- WO-A-91/08919
- CH-C- 299 479
- DE-A- 3 426 967
- DE-C- 473 599
- DE-C- 3 620 879
- DE-U- 8 706 386
- FR-A- 1 324 947
- US-A- 5 156 648
- PATENT ABSTRACTS OF JAPAN vol. 9, no. 34 (M-357)(1757) 14. Februar 1985 & JP-A-59 176 498 (EBARA SEISAKUSHO K.K.) 5. Oktober 1984

## Beschreibung

Die Erfindung betrifft eine Verstelleinrichtung gemäß dem Oberbegriff des Hauptanspruches.

Eine derartige Verstelleinrichtung ist beispielsweise in der DE-PS 34 26 967 gezeigt. Diese sieht eine Welle mit zentrischer Bohrung vor, wobei innerhalb der Bohrung eine Spindel für einen Verstellmechanismus im Verstellpropeller vorgesehen ist. Die Welle selbst verfügt an ihrem pumpenfernen Ende über eine Kupplung zur Drehmomenteinleitung. Ein Flansch der wahrscheinlich mehrteiligen Welle ist als Hohlflansch ausgebildet und enthält im Bodenbereich ein Untersetzungsgetriebe sowie eine Lagerung für kräfteeinleitende Zahnräder. Die Krafteinleitung zum Untersetzungsgetriebe innerhalb des Hohlflansches erfolgt über verschiedene Axialebenen. Das Drehmoment für den Verstellmechanismus wird in sehr aufwendiger Weise durch einen außen angeordneten Elektromotor und unter Zwischenschaltung eines äußeren Differentialgetriebes erzeugt. Diese Bauart verfügt ungünstigerweise über ein großes Bauvolumen.

Aus der JP-A 59-176 498 ist ein Verstellmechanismus bekannt, bei dem im Bereich eines Wellenendes ein Rotor eines elektrischen Antriebsmotors unter Zwischenschaltung einer Spindelmutter und eines Gleitstückes auf dem Wellenende montiert ist. Während des Betriebes wird der Rotor zur Welle axial verschoben und eine axiale Schubkraft erzeugt, die über ein Joch innerhalb eines Hohlflansches eine Axialbewegung auf eine Verstellspindel überträgt. Da der Rotor innerhalb seines Stators eine Axialbewegung ausführen muß, ist ein Stator mit einer überproportionalen Länge erforderlich. Dadurch ergibt sich ein sehr unwirtschaftliches Betriebsverhalten. Zudem ist diese Lösung sehr aufwendig und störanfällig.

Der Erfindung liegt die Aufgabe zugrunde, eine Verstelleinrichtung zu entwickeln, die in ein Wellenende integrierbar ist. Die Lösung dieses Problems sieht einen auf dem Hohlflansch gelagerten ringförmigen Rotor vor, dessen zur Drehachse hin weisende Rotorseite eine drehmomentübertragende Formgebung aufweist und kräfteübertragend mit dem Getriebe innerhalb des Hohlflansches verbunden ist und daß der Rotor durch einen Motor antreibbar ist.

Diese Bauweise ermöglicht einen sehr kompakten Aufbau und kann vielseitig verwendet werden. So sind in den Hohlflansch verschiedene Getriebebauformen integrierbar und auch das Antriebskonzept für den Rotor kann in vielfältiger Weise variiert werden.

Hierzu sieht eine Ausgestaltung der Erfindung vor, daß der Rotor als Rotor eines Elektromotors ausgebildet ist. Durch eine direkte Lagerung des Rotors auf dem Kohlflansch erfolgt eine gravierende Reduzierung des Durchmessers. Der Stator des Elektromotors selbst kann im stillstehenden Teil der Strömungsmaschine, beispielsweise einem Tauchmotorpumpenaggregat, einer Laterne einer Rohrgehäusepumpe oder Turbine, einem Lagergehäuse der Welle oder dergleichen angeordnet sein.

Entsprechend dem Aufbau der zugehörigen Maschine kann diese Lösung ein Optimum darstellen. Für Anwendungsfälle jedoch, bei denen der Verwendung von handelsüblichen und in großen Stückzahlen auf dem Markt erhältlichen Bauteilen der Vorzug gegeben werden soll, sieht eine andere Ausgestaltung der Erfindung vor, daß die von der Drehachse wegweisende Rotorseite eine den Eingriff von Getriebeelementen gewährleistende Formgebung aufweist und der Rotor unter Zwischenschaltung von Getriebeelementen durch einen Elektromotor antreibbar ist.

Die äußere Umfangsseite des Rotors kann somit die unterschiedlichsten Formgebungen zum Eingriff von Getriebebauteilen aufweisen. Hierbei sind Verzahnungen für Zahnräder, Zahnriemen und Ketten möglich; Formgebungen zum Eingriff von Treibriemen, Reibsystemen oder anderer bekannter Übertragungssysteme. Als Antriebsmotor können sogenannte Normmotoren oder andere Verwendung finden, wobei als zusätzlicher Vorteil durch die Zwischenschaltung eines Getriebes zwischen Motor und Rotor eine günstige Beeinflussung der Drehzahlverhältnisse sowie des gewünschten Drehmomentes möglich ist. Ein eventuell geringfügig größeres Bauvolumen kann durch eine entsprechende Anordnung des Motors in Bereichen der Strömungsmaschine kompensiert werden, in denen genügend Freiraum zur Verfügung steht. Die Verwendung standardisierter Bauteile stellt jedoch einen erheblichen Vorteil in bezug auf Lagerhaltung und Servicefreundlichkeit dar.

Eine weitere Ausgestaltung der Erfindung sieht vor, daß in Ausnehmungen des Hohlflansches ein oder mehrere Zwischenräder drehbar gelagert sind. Die die Umfangsfläche des Hohlflansches bildende Wandfläche weist in entsprechend ausgebildeten Lagerstellen ein oder mehrere Zwischenräder zur Übertragung eines zur Verstellung notwendigen Drehmomentes auf ein innerhalb des Hohlflansches angeordnetes Getriebe auf. Entsprechend der innerhalb des Hohlflansches Anwendung findenden Getriebebauform können die Zwischenräder als Zahnräder, Reibräder, Kurvenscheiben oder entsprechend ausgebildet sein. Es ist auch ohne weiteres möglich, den Rotor mit den Zwischenrädern direkt und ohne zusätzliches Getriebe auf eine Verstellspindel einwirken zu lassen. Der Rotor oder dessen Antrieb kann auch über die Möglichkeit zu einer Drehrichtungsumkehr verfügen.

Für die Motorauslegung sind mehrere Auslegungsarten möglich. Der Motor müßte während des Betriebes bremsbar sein und eine, bezogen auf die gleiche Drehrichtung, größere Drehzahl als die Welle aufweisen. Mittels dieser Maßnahmen sind Relativbewegungen der Verstellspindel zur Welle möglich und damit eine Verstellfunktion durchführbar.

Die andere Möglichkeit sieht einen Antrieb vor, der mindestens zwei Drehzahlen aufweist, die in bezug auf die Pumpenwellendrehzahl schneller oder langsamer sind. Auch damit kann eine Relativbewegung der Spindel erzeugt werden, um einen Verstellmechanismus der Schaufeln zu betätigen.

Für denjenigen Fall, daß ein Antrieb mit gleichen Drehzahlen, aber zwei verschiedenen Drehrichtungen Anwendung findet, kann für eine Drehrichtung ein zusätzliches Untersetzungsgetriebe Verwendung finden, um annähernd gleiche Drehzahlen für einen Verstellmechanismus zu erhalten, falls dies für den jeweiligen Verwendungsfall notwendig sein sollte.

Auch ist es möglich, einen Verstellmotor intermittierend zu betreiben. Durch kurzfristige Inbetriebnahmen können genaue Schaufelpositionen erreicht werden.

Nach einer anderen Ausgestaltung der Erfindung ist die zur Drehachse weisende Rotorseite als Hohlrad eines Umlaufgetriebes ausgebildet. Damit würde der Hohlflansch für die darin gelagerten Zwischenräder gewissermaßen die Funktion eines Planetenradträgers übernehmen. Zwischen den einzelnen Planetenrädern wäre dann ein sogenanntes Sonnenrad eines zu den Umlaufgetrieben gehörenden Planetengetriebes lagerbar. Je nach den gewünschten Über- oder Untersetzungsverhältnissen sind innerhalb des Hohlflansches die bekannten Bauformen von ein- oder mehrstufigen Getriebebauarten anbringbar.

Ausführungsbeispiele der Erfindung sind in den Zeichnungen dargestellt und werden im folgenden näher beschrieben. Es zeigen die
- Fig. 1: einen Querschnitt durch eine Strömungsmaschine mit Verstelleinrichtung durch Getriebeuntersetzung, die
- Fig. 2: bei einer gleichen Strömungsmaschine eine quasi direkt antreibende Verstelleinrichtung und die
- Fig. 3: eine andere Art der Krafteinleitung in die Verstelleinrichtung.

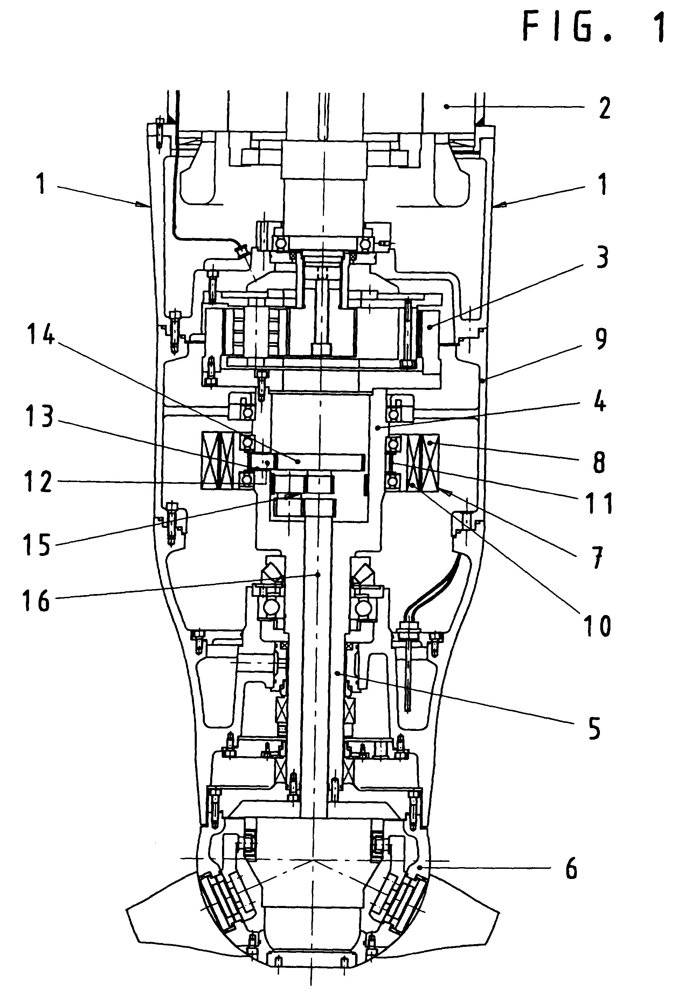

In Fig. 1 ist als Beispiel einer Strömungsmaschine 1 ein Tauchmotorpumpenaggregat gezeigt. Dieses besteht aus einem schnellaufenden Motor 2 mit einem nachgeordneten Untersetzungsgetriebe 3, einer daran mittels eines Hohlflansches 4 angekoppelten Welle 5, auf der ein Verstellpropeller 6 befestigt ist. Innerhalb der Welle 5 ist eine Verstellspindel 16 angeordnet, mit der Verstellkräfte zu einem Verstellmechanismus - hier nicht dargestellt - innerhalb des Verstellpropellers 6 geleitet werden. Der Hohlflansch 4, der hier als Teil der Welle 5 gezeigt ist, kann ebenso gut als Teil des Untersetzungsgetriebes 3, als Teil der Welle des Motors 2 oder als ein anderes Wellenteil ausgebildet sein. Den Außenumfang des Hohlflansches 4 umgibt hier ein Elektromotor 7, dessen Stator 8 drehfest innerhalb des Gehäuseteiles 9 befestigt ist und dessen kreisringförmiger Rotor 10 drehbar auf den Hohlflansch 4 gelagert ist. Der Innendurchmesser des Rotors 10 ist mit einer drehmomentübertragenden Formgebung 11 ausgestattet. Anstelle der hier nur beispielhaft gezeigten Verzahnung können auch andere bekannte kräfteübertragende Gestaltungen Anwendung finden. In die hier gewählte Verzahnung der Formgebung 11 greift ein kleineres Zwischenrad 12 ein, welches in Ausnehmungen 13 des Hohlflansches 4 gelagert ist. Je nach der innerhalb des Hohlflansches 4 angeordneten Getriebebauart können ein oder mehrere Zwischenräder 12 im Hohlflansch 4 gelagert sein. Die Funktion eines Zwischenrades kann auch von rollen- oder kugelförmigen Formstücken übernommen werden. In der gezeigten Ausführungsform ist beispielhaft ein Umlaufgetriebe in Form eines Planetengetriebes gezeigt, wobei innerhalb der Zwischenräder 12 - in diesem Fall auch als Planetenräder bezeichenbar - ein sogenanntes Sonnenrad 14 gelagert ist. Von dem Sonnenrad 14 wird über eine weitere, innerhalb des Hohlflansches 4 gelagerten Getriebestufe 15 die Verstellspindel 16 angetrieben. Diese wirkt mit einem Verstellmechanismus des Verstellpropellers 6 zusammen.

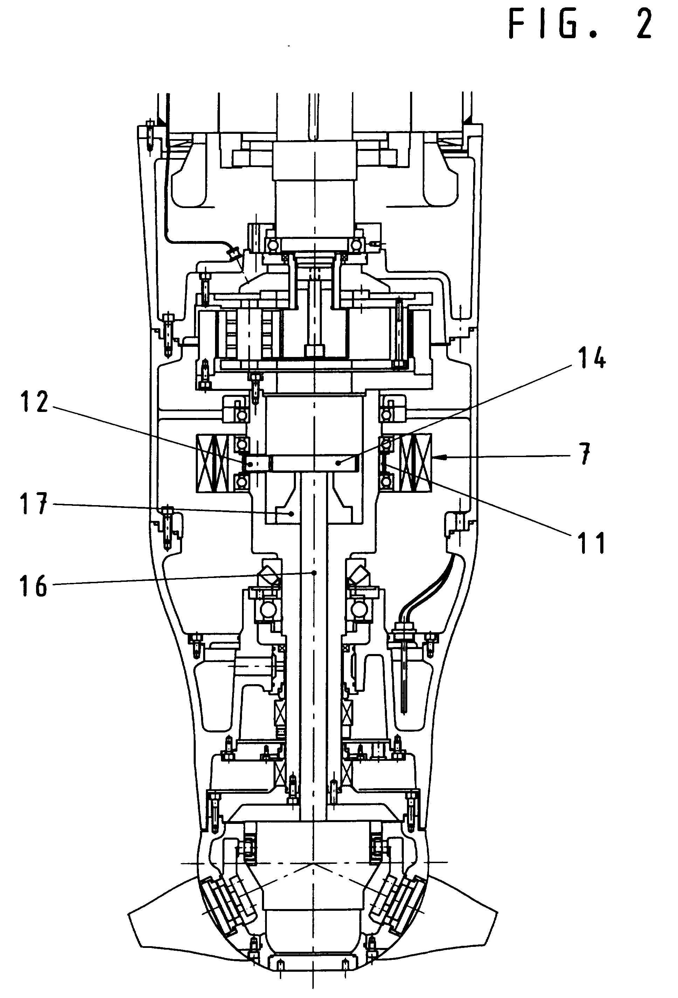

Das Ausführungsbeispiel der Fig. 2 unterscheidet sich von der Fig. 1 durch den Antrieb der Verstellspindel. Der Elektromotor 7 treibt hier die Verstellspindel 16 nahezu direkt an. Lediglich die unterschiedlichen Verhältnisse zwischen dem Rotor 10, den Zwischenrädern 12 und dem die Verstellspindel 16 antreibenden Rad 14 sorgen für ein leichtes Untersetzungsverhältnis. Eine Lagerung 17 innerhalb des Hohlflansches 4 sorgt für eine sichere Positionierung der Verstellspindel 16.

Um eine Verstellung auch während des Betriebes gewährleisten zu können, kann der für die Verstellung verantwortliche Elektromotor 7 verschiedene Betriebszustände aufweisen. Er kann bremsbar sein und/oder über eine Drehzahl verfügen, die höher ist als die Drehzahl der Welle 5. Somit wirkt er in bezug auf die Welle überholend. Dadurch und durch die Bremswirkung des Motors lassen sich Relativgeschwindigkeiten der Verstellspindel erzeugen.

Der Motor kann aber auch verschiedene Drehzahlen aufweisen, die schneller oder langsamer als die Wellendrehzahl sind. Oder mit Hilfe des in dem Hohlflansch angeordneten Getriebes können Drehrichtungs- oder Drehzahländerungen erfolgen.

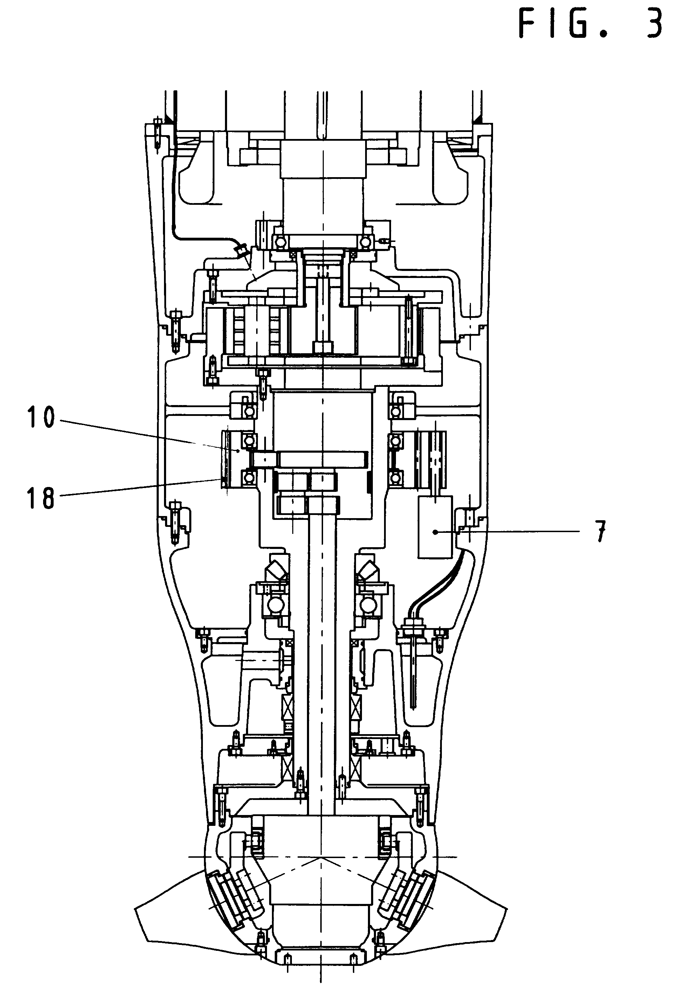

In Fig. 3 ist eine andere Art des Rotorantriebes gezeigt. Der Rotor 10 ist als ein Bauteil ausgebildet, auf dessen Außenseite eine Krafteinleitung erfolgt. Dies kann beispielsweise durch einen Riemen-, Ketten-, Reibrad-, Zahnradantrieb oder dgl. geschehen. Das hier gezeigte Getriebeelement 18 stellt einen Zahnriemen dar, der die Kraft eines handelsüblichen Elektromotors 7 auf den Rotor 10 überträgt.

## Patentansprüche

1. Verstelleinrichtung für auf einer Welle befestigte Verstellpropeller von Strömungsmaschinen, wobei die Welle einen Hohlflansch aufweist und innerhalb desselben ein Getriebe angeordnet ist, **dadurch gekennzeichnet**, daß auf dem Hohlflansch (4) ein ringförmiger Rotor (10) gelagert ist, daß dessen zur Drehachse hin weisende Rotorseite eine drehmomentübertragende Formgebung (11) aufweist und kräfteübertragend mit dem Getriebe (12, 14, 15) innerhalb des Hohlflansches verbunden ist, und daß der Rotor (10) durch einen Motor (7) antreibbar ist.

2. Verstelleinrichtung nach Anspruch 1, dadurch gekennzeichnet, daß der Rotor (10) als Rotor eines Elektromotors (7) ausgebildet ist.

3. Verstelleinrichtung nach Anspruch 1, dadurch gekennzeichnet, daß die von der Drehachse wegweisende Rotorseite eine den Eingriff von Getriebeelementen (18) gewährleistende Formgebung aufweist und der Rotor (10) unter Zwischenschaltung von Getriebeelementen durch einen Elektromotor (7) antreibbar ist.

4. Verstelleinrichtung nach den Ansprüchen 1 bis 3, dadurch gekennzeichnet, daß in Ausnehmungen (13) des Hohlflansches (4) ein oder mehrere Zwischenräder (12) drehbar gelagert sind.

5. Verstelleinrichtung nach einem oder mehreren der Ansprüche 1 bis 4, dadurch gekennzeichnet, daß die zur Drehachse weisende Rotorseite als Hohlrad eines Umlaufgetriebes ausgebildet ist.

## Claims

1. A setting device for an adjustable propeller attached to a shaft of a fluid flow machine, said shaft having a hollow flange within which a transmission is arranged, characterized in that an annular rotor (10) is rotatably mounted on the hollow flange (4), in that the rotor side thereof directed toward the axis of rotation possesses a torque transmitting configuration (11) and is connected in a force transmitting fashion with the transmission (12, 14 and 15) and in that the rotor (10) is able to be driven by a motor (7).

2. The setting device as claimed in claim 1, characterized in that the rotor (10) is designed in the form of the rotor of an electric motor (7).

3. The setting device as claimed in claim 1, characterized in that the rotor side facing away from the axis of rotation possesses a configuration ensuring engagement of transmission elements (18) and the rotor (10) is able to be driven by the intermediary of transmission elements from an electric motor (7).

4. The setting device as claimed in the claims 1 through 3, characterized in that one or more intermediate wheels (12) are rotatably mounted in recesses (13) in the hollow flange (4).

5. The setting device as claimed in any one or more of the claims 1 through 4, characterized in that the rotor side facing the axis of rotation is designed in the form of the annulus of epicyclic gearing.

## Revendications

1. Dispositif de réglage pour des hélices à pales variables de turbo machines, fixées sur un arbre, dans lequel l'arbre présente une bride creuse, dans laquelle se trouve un engrenage caractérisé en ce que sur la bride creuse (4) est positionné un rotor annulaire (10), en ce que son côté tourné vers l'axe de rotation présente une forme (11) permettant la transmission du mouvement et qu'il est relié à l'engrenage (12, 14, 15) à l'intérieur de la bride creuse pour transmettre des forces et que le rotor (10) peut être entraîné par un moteur (7).

2. Dispositif de réglage selon la revendication 1 caractérisé en ce que le rotor (10) a la forme d'un rotor de moteur électrique (7).

3. Dispositif de réglage selon la revendication 1 caractérisé en ce que le côté du rotor tourné vers l'extérieur de l'axe de rotation présente une forme assurant l'engrènement d'éléments d'engrenage (18) et que le rotor (10) peut être entraîné par un électromoteur (7) en interposant des éléments d'engrenage.

4. Dispositif de réglage selon les revendications 1 à 3 caractérisé en ce qu'une ou plusieurs roues intermédiaires (12) sont positionnées pour tourner dans des creux (13) de la bride creuse (4).

5. Dispositif de réglage selon une ou plusieurs des revendications 1 à 4 caractérisé en ce que le côté du rotor tourné vers l'axe de rotation a la forme d'une roue creuse d'un engrenage planétaire.
